# FASCICULE DE BREVET EUROPEEN

(11) **EP 3 502 634 B1**
(45) Date de publication et mention de la délivrance du brevet: **21.04.2021**
(21) Numéro de dépôt: 18212921.3
(22) Date de dépôt: 17.12.2018
(51) Int. Cl.: G01G 7/06, G01G 17/04, G01F 23/20, G01F 23/22

(54) **SYSTÈME DE DÉTECTION DU DÉPASSEMENT D'UN SEUIL DÉTERMINÉ DE QUANTITÉ DE CONTENU DANS UN CONTENANT**
DETEKTIONSSYSTEM FÜR DIE ÜBERSCHREITUNG EINER VORBESTIMMTEN SCHWELLE DER MENGE EINES INHALTS EINES BEHÄLTERS
SYSTEM FOR DETECTING AN EXCEEDED THRESHOLD OF THE AMOUNT CONTAINED IN A CONTAINER

(30) Priorité: 22.12.2017 FR 1763008
(43) Date de publication de la demande: 26.06.2019
(73) Titulaire: SEB S.A., 69130 Ecully (FR)
(72) Inventeur: LEBUFFE, Gilles, 50890 CONDE SUR VIRE (FR); BEULE, Mickael, 14400 NONANT (FR); DUTERTRE, Thierry, 61000 SAINT GERMAIN DU CORBEIS (FR)
(74) Mandataire: SEB Développement

(56) Documents cités:
- CN-A- 106 289 490
- US-A1- 2007 261 894
- US-A1- 2010 102 830
- US-A1- 2014 311 239

## Description

La présente invention se rapporte au domaine technique général de la métrologie pour déterminer une information relative à une quantité de contenu dans un contenant dans un appareil électroménager.

Plus particulièrement, la présente invention se rapporte à un système comprenant un dispositif de détection de dépassement d'un seuil déterminé de quantité de contenu dans un contenant et un contenant, et à un procédé de fonctionnement d'un tel système de détection et à un appareil comprenant un tel système de détection.

Il est connu des documents US2007261894 et US2014311239 des dispositifs capacitifs de mesure de force utilisant un capteur capacitif avec des jauges de déformations.

Il est également connu de disposer de capteurs capacitifs en boucle ouverte pour détecter la présence d'une quantité de contenu dans un contenant, par exemple de l'eau dans un réservoir et du lait dans un pot à lait d'une machine à café Espresso.

Ce type de capteur capacitif réalise une mesure directe sur la paroi interne du contenant.

Cependant, dans le cas de l'eau dans un réservoir, il a été constaté que lorsque du tartre se forme sur la paroi, alors de l'humidité reste accrochée à la paroi du réservoir, ce qui induit en erreur le capteur qui détecte un réservoir avec de l'eau alors qu'il peut être vide.

De même, dans le cas d'un pot à lait, il a été constaté qu'une pellicule de gras se dépose sur la surface interne du pot au fur et à mesure que le niveau de lait diminue.

Cette pellicule de gras perturbe fortement les mesures du capteur capacitif qui émet des signaux relatifs à un pot à lait suffisamment rempli alors que le niveau de lait est en deçà du niveau acceptable pour préparer une boisson.

Il est également connu d'utiliser un plateau amovible pour le pesage de contenant et de son contenu et ainsi définir une valeur seuil au-delà de laquelle il sera considéré qu'il n'y a plus assez de contenu dans le contenant pour réaliser une recette.

Néanmoins, l'absence de ce plateau amovible par exemple lors d'un nettoyage, ne permet pas de garantir une bonne étanchéité aux liquides, ce qui à terme peut conduire à une panne de l'appareil.

Il est également connu de réaliser des contenants transparents de manière à donner une information à l'utilisateur sur la quantité de contenu dans ces contenants.

Toutefois, la paroi transparente de ces contenants peut se détériorer de par le dépôt d'une couche de tartre, par exemple dans un réservoir d'eau, ou bien de par leur nettoyage, par exemple dans un pot à lait, qui peut engendrer des micro rayures inesthétiques et affectant la transparence du contenant.

Par ailleurs, l'utilisateur qui voit une quantité de contenu dans un contenant ne sait pas forcément si cette quantité est suffisante pour réaliser sa recette, seul son jugement étant mis à contribution pour une prise de décision.

Aussi la présente invention a pour but de résoudre tout ou partie des inconvénients mentionnés ci-dessus, notamment en proposant un système fiable et robuste permettant de donner une information correcte à un utilisateur relative à une quantité de contenu dans un contenant de manière à garantir une bonne utilisation de son appareil électroménager.

A cet effet, l'invention se rapporte à un système de détection du dépassement d'un seuil déterminé de quantité de contenu dans un contenant comme spécifié dans la revendication indépendante 1 annexée.

Un tel dispositif peut aisément être implémenté dans tout appareil électroménaer comprenant un contenant pour un contenu destiné à être consommé ou produit par l'appareil électroménager.

Un tel insert peut être inséré dans le contenant de tout appareil électroménager utilisé comme un réservoir d'un consommable ou bien comme collecteur de produit consommé.

L'invention permet de faciliter le nettoyage du fait de l'absence de plateau amovible pour déterminer une quantité de contenu dans un contenant. L'utilisation de l'insert et de l'aimant permet de répercuter la déformation du support plastique sur la plaque métallique, cette déformation étant relativement faible, environ 100µm.

Selon un aspect de l'invention, la valeur de base est déterminée suite à la détection du retrait du contenant de son emplacement sur le support.

Cette disposition permet d'obtenir un système fiable quant à la reproduction des signaux renvoyés par le capteur capacitif.

Selon un aspect de l'invention, l'aimant traverse la paroi de la zone déformable de l'emplacement agencé pour accueillir le contenant.

Selon un aspect de l'invention, l'aimant fait saillie de la première face de la paroi de la zone déformable de l'emplacement du support et l'insert fait saillie de la surface extérieure du fond du contenant de manière à ce que l'aimant et l'insert soient au contact l'un de l'autre lorsque le fond du contenant est disposé dans son emplacement sur le support.

Cette disposition permet de créer un contact entre l'aimant et l'insert et ainsi d'éviter que l'aimant génère une force d'attraction sur l'insert et donc une déformation de la plaque métallique en direction du contenant lorsque le contenant est disposé dans son emplacement sur le support.

Selon un aspect de l'invention, l'aimant et l'insert font saillie de 0,1 à 0,3 millimètre.

Selon un aspect de l'invention, l'emplacement comprend une portion en saillie sur laquelle est disposée la zone déformable.

Selon un aspect de l'invention, le fond du contenant comprend une collerette transverse d'une hauteur inférieure à la hauteur de la portion en saillie de l'emplacement sur laquelle est disposée la zone déformable.

La présente invention se rapporte également à un procédé de fonctionnement d'un système de détection tel que décrit précédemment comprenant les étapes suivantes :
- déterminer une valeur de base relative au positionnement de la plaque métallique lorsque le contenant est détecté comme étant retiré de son emplacement sur le support,
- positionner le contenant sur son emplacement sur le support,
- déterminer une valeur relative au positionnement de la plaque métallique par rapport à la valeur de base déterminée,
- déterminer si cette valeur relative est supérieure à une valeur seuil déterminée corrélée à un seuil déterminé de quantité de contenu dans le contenant.

Selon un aspect de l'invention, le procédé comprend en outre une étape consistant à générer un signal d'alerte à destination de l'utilisateur lorsque cette valeur relative au positionnement est inférieure à la valeur seuil déterminée.

Selon une mise en œuvre du procédé, la valeur de base est déterminée suite à la détection du retrait du contenant de son emplacement sur le support.

Selon une mise en oeuvre du procédé, le retrait du contenant de son emplacement sur le support est détecté lorsque la valeur relative au positionnement de la plaque métallique par rapport à la valeur de base déterminée est inférieure à une valeur minimale prédéterminée relative à la force d'attraction de l'aimant sur l'insert lors du retrait du contenant de son emplacement sur le support.

Cette disposition permet de distinguer des signaux relatifs au retrait du contenant de signaux relatifs à une action directe de l'utilisateur sur la zone déformable du dispositif de détection.

La présente invention se rapporte également à appareil électroménager comprenant un système de détection du dépassement d'un seuil déterminé de quantité de contenu dans un contenant tel que décrit précédemment.

Selon un aspect de l'invention, le contenant est un pot à lait, un bac à cake, ou un réservoir d'eau d'une machine à café Espresso.

D'autres avantages et caractéristiques de l'invention ressortiront mieux à la lecture de la description détaillée de l'invention faite à titre illustratif et non limitatif en référence aux figures qui illustrent tout ou partie d'un système commandable de verrouillage magnétique selon l'invention.
La figure 1 illustre un appareil électroménager, notamment une machine à café Espresso, comprenant un système de détection selon l'invention.
La figure 2 illustre un contenant du type pot à lait et le dispositif de détection d'un système de détection selon l'invention.
La figure 3 est une vue éclatée d'une partie des éléments composant le dispositif de détection du système selon l'invention.
La figure 4 est un graphe illustrant le signal du capteur capacitif après le retrait du contenant de son emplacement sur le support.
La figure 5 est un graphe illustrant le signal du capteur capacitif après la pose et le retrait d'un contenant vide du type pot à lait de son emplacement sur le support.
La figure 6 est un graphe illustrant le signal du capteur capacitif après la pose et le retrait d'un contenant du type pot à lait comprenant 80 ml de lait de son emplacement sur le support.
La figure 7 est un graphe illustrant le signal du capteur capacitif après la pose et le retrait d'un contenant plein du type pot à lait de son emplacement sur le support.

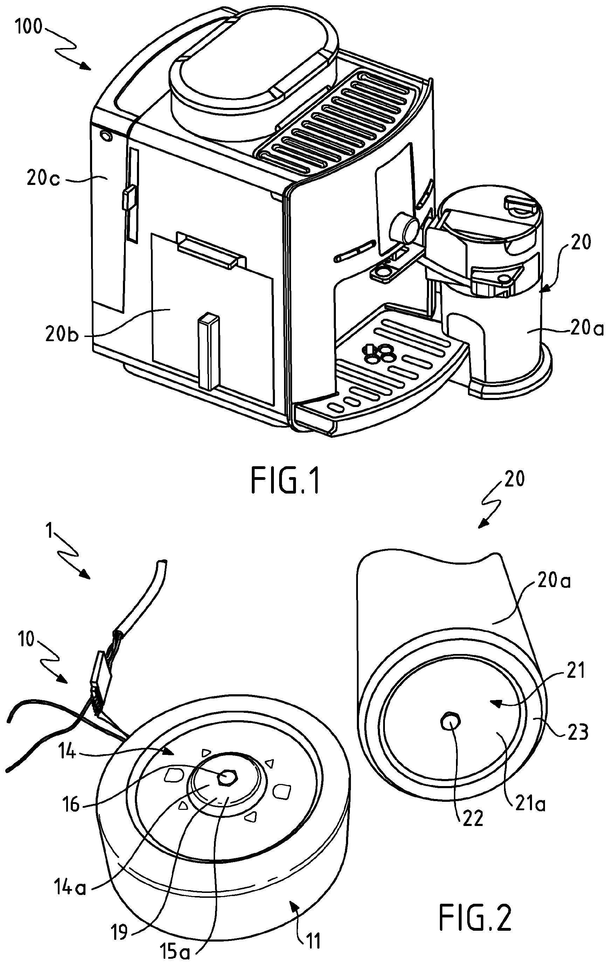

Dans l'exemple présenté à la figure 1, un système de détection 1 du dépassement d'un seuil S déterminé de quantité de contenu dans un contenant 20 selon l'invention est utilisé dans un appareil électroménager 100 du type machine à café Espresso.

Dans cette machine à café Espresso, le contenant 20 peut être un pot à lait 20a, un bac à cake 20b, ou un réservoir d'eau 20c.

Chacun de ces contenants 20, 20a, 20b, 20c est associé à un dispositif de détection 10 décrit ci-après.

Ainsi, comme illustré à la figure 2, un système de détection 1 du dépassement d'un seuil S déterminé de quantité de contenu dans un contenant 20 selon l'invention comprend un dispositif de détection 10 et un contenant 20.

Dans la suite de la description, nous considérerons que le contenant 20 est un pot à lait 20a.

Un dispositif de détection 10 selon l'invention comprend un support 11 et des moyens de traitement (non illustrés).

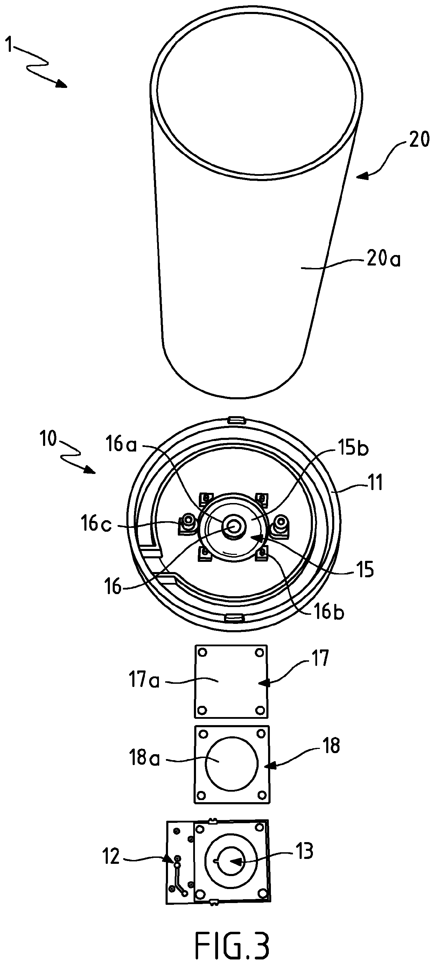

Comme illustré à la figure 3, le support 11 comprend un circuit imprimé 12 et un emplacement 14 apte à accueillir le pot à lait 20a.

En outre, le circuit imprimé 12 comprend un capteur capacitif 13.

Le capteur capacitif 13 est un capteur du type Metal Over Cap, commercialisé par la société Microchip Technology et décrit dans la demande de brevet US2010102830 déposée au même nom.

Ce type de capteur émet des signaux en fonction de la distance séparant le capteur d'une plaque métallique disposé au-dessus du capteur mais à distance de celui-ci.

Comme illustré aux figures 2 et 3, l'emplacement 14 apte à accueillir le pot à lait 20a comprend une zone déformable 14a sous l'action du poids du pot à lait 20a.

Cette zone déformable 14a comprend une paroi 15 présentant une première face 15a orientée en direction du pot à lait 20a, et une deuxième face 15b opposée à la première face 15a.

La paroi 15 est réalisée en matière plastique et est apte à subir des déformations élastiques de quelques dizaines de micromètres.

Le capteur capacitif 13 est disposé du côté de la deuxième face 15b et orienté en direction de la première face 15a.

Par ailleurs, le support 11 comprend un aimant 16, une plaque métallique 17 et une entretoise 18.

L'aimant 16 est fixé dans la zone déformable 14a de l'emplacement 14 du support 11 apte à accueillir le pot à lait 20a.

L'aimant 16 fait saillie, notamment de 0,1 à 0,3 millimètre, de la première face 15a de la paroi 15 de la zone déformable 14a et est emmanché à l'intérieur d'un manchon 16a s'étendant transversalement depuis la première face 15a de la paroi 15 en direction de la deuxième face 15b de la paroi 15 sur une longueur déterminée.

La plaque métallique 17 est disposée entre l'aimant 16 et le capteur capacitif 13.

Cette plaque métallique 17 présente une forme carrée et comprend quatre trous ménagés sur ces quatre coins destinés à être traversés par des ergots disposés à l'extrémité de quatre profilés 16b s'étendant transversalement depuis la deuxième surface 15b de la paroi 15.

En outre, la plaque métallique 17 comprend une partie déformable 17a.

L'aimant 16 exerce une force d'attraction continue sur la partie déformable 17a de la plaque métallique 17 mais la partie déformable 17a est maintenue à une distance sensiblement constante de l'aimant 16 par le manchon 16a.

Ainsi, le manchon 16a et les profilés 16c permettent de maintenir cette distance sensiblement constante tout en autorisant la déformation de la partie déformable 17a de la plaque métallique 17.

L'entretoise 18 est quant à elle disposée entre le capteur capacitif 13 et la plaque métallique 17.

Tout comme la plaque métallique 17, l'entretoise 18 présente également une forme carrée et présente quatre trous ménagés sur ces quatre coins destinés à être traversés par les ergot disposés à l'extrémité des quatre profilés 16b.

De plus, l'entretoise 18 comprend un orifice 18a central agencé d'une part pour placer la partie déformable 17a de la plaque métallique 17 en regard du capteur capacitif 13 de manière à maintenir la plaque métallique 17 dans un mode fonctionnel du capteur capacitif 13 dans lequel le capteur capacitif 13 émet des signaux relatifs à la distance séparant la plaque métallique 17 et le capteur capacitif 13, et d'autre part pour permettre à la partie déformable de la plaque métallique de se déformer.

L'amplitude de la déformation de la plaque métallique n'est que de quelques centièmes de millimètre, typiquement d'environ 100 µm.

Le circuit imprimé 12 comprend lui aussi quatre trous venant coïncider avec les ergots des quatre profilés 16b.

Ainsi, la plaque métallique 17, l'entretoise 18 et le circuit imprimé 12 comprenant le capteur capacitif 13 sont alignés grâce aux ergots des profilés 16b et sont maintenus en sandwich sur les profilés 16b par des vis (non illustrées) venant se fixer dans des cylindres creux 16c s'étendant transversalement depuis la deuxième face 15b.

Enfin, comme illustré à la figure 2, l'emplacement 14 comprend une portion 19 en saillie sur laquelle est disposée la zone déformable 14a.

Les moyens de traitements sont quant à eux agencés pour :
- traiter les signaux émis par le capteur capacitif 13,
- déterminer une valeur relative V au positionnement de la plaque métallique 17 par rapport à une valeur de base V_{base} déterminée,
- déterminer si cette valeur relative V au positionnement est supérieure à une valeur seuil Vₛₑᵤᵢₗ déterminée relative à un seuil S déterminé de quantité de contenu dans le pot à lait 20a.

Ces moyens de traitement sont par exemple un microcontrôleur ou bien tout autre dispositif électronique apte à réaliser des opérations de calcul.

Les moyens de traitement peuvent être disposés dans le circuit imprimé 12 ou bien à distance dans une autre partie de l'appareil électroménager 100.

Le pot à lait 20a comprend quant à lui un fond 21 apte à venir en appui sur la zone déformable 14a lorsque le pot à lait 20a est disposé dans son emplacement 14 sur le support 11.

En outre, le fond 21 comprend un insert 22 ferromagnétique agencé pour interagir avec l'aimant 16 lorsque le pot à lait 20a est disposé dans son emplacement 14 sur le support 11.

L'insert 22 fait saillie de la surface extérieure 21a du fond 21 du pot à lait 20a, notamment de 0,1 à 0,3 millimètre, de manière à ce que l'aimant 16 et l'insert 22 soient au contact l'un de l'autre lorsque le fond 21 du pot à lait 20a est disposé dans son emplacement 14 sur le support 11.

Enfin, le fond 21 du pot à lait 20a comprend une collerette 23 transverse d'une hauteur inférieure à la hauteur de la portion 19 en saillie de l'emplacement 14 sur laquelle est disposée la zone déformable 14a.

Ainsi, tout le poids exercé par le pot à lait 20a lorsqu'il est disposé dans son emplacement 14 sur le support 11, est concentré sur la zone déformable 14a de l'emplacement 14 et en particulier sur l'aimant 16.

L'attraction de l'aimant 16 sur l'insert 22 permet de stabiliser le pot à lait 20a dans son emplacement 14.

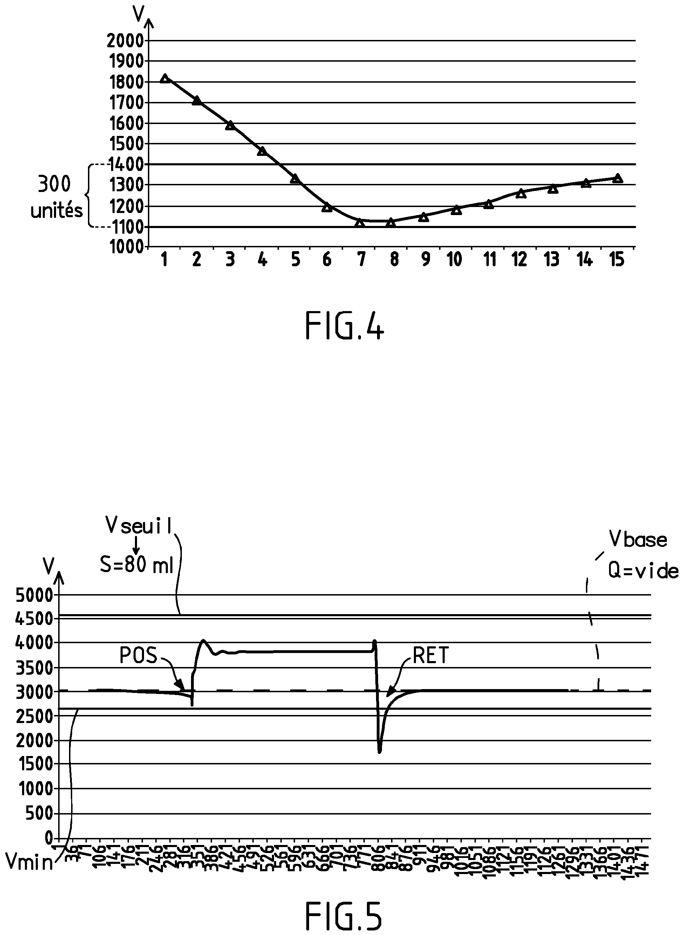

Le fonctionnement d'un système de détection 1 du dépassement d'un seuil S déterminé de quantité Q de contenu dans un pot à lait 20a selon l'invention va maintenant être explicité en référence aux figures 4 à 7.

Sur ces graphes, l'axe des ordonnées a une dimension de longueur et illustre le déplacement de la partie déformable 17a de la plaque métallique 17 par rapport au capteur capacitif 13, tandis que l'axe des abscisses a la dimension d'un temps.

Les points illustrent donc les différentes acquisitions du signal du capteur capacitif 13 au cours du temps.

Ainsi, plus la valeur en ordonnée est élevée, plus la plaque métallique 17 est proche du capteur capacitif 13 par rapport à une valeur moins élevée et autrement dit, plus l'écart entre la plaque métallique 17 et le capteur capacitif 13 est faible.

A contrario, plus la valeur en ordonnée est faible, plus la plaque métallique 17 est éloignée du capteur capacitif 13 par rapport à une valeur plus élevée et autrement dit, plus l'écart entre la plaque métallique 17 et le capteur capacitif 13 est élevé.

Le graphe de la figure 4 illustre les signaux renvoyés par le capteur capacitif 13 lors du retrait d'un pot à lait 20a vide de son emplacement 14 sur le support 11.

On remarque sur ce graphe que lors du retrait du pot à lait 20a, les signaux du capteur capacitif 13 indiquent que l'écart entre la plaque métallique 17 et le capteur capacitif 13 augmente au cours d'une première phase puis diminue au cours d'une deuxième phase.

L'augmentation de l'écart entre la plaque métallique 17 et le capteur capacitif 13 au cours d'une première phase s'explique par l'attraction magnétique qu'exerce l'aimant 16 sur l'insert métallique disposé sur la surface extérieure 21a du fond 21 du pot à lait 20a lors du retrait du pot à lait 20a de son emplacement 14 sur le support 11.

La diminution de l'écart au cours de la deuxième phase s'explique quant à elle par la relaxation du matériau composant la zone déformable 14a de l'emplacement 14 sur le support 11.

Le graphe de la figure 5 illustre les signaux renvoyés par le capteur capacitif 13 lors de la pose puis du retrait du pot à lait 20a vide.

Sur ce graphe, on remarque une première variation POS du signal correspondant à la pose du pot à lait 20a dans son emplacement 14 sur le support 11 et une deuxième variation RET du signal correspondant au retrait du pot à lait 20a de son emplacement 14 sur le support 11.

On remarque également que lors de la pose du pot à lait 20a, l'écart entre la plaque métallique 17 et le capteur capacitif 13 augmente légèrement puis diminue fortement avant d'augmenter à nouveau légèrement.

La première légère augmentation de l'écart est due à l'approche de l'insert 22 de l'aimant 16 qui déforme la zone déformable 14a en direction du pot à lait 20a, la diminution de l'écart est due à l'action du poids du pot à lait 20a sur la zone déformable 14a et la deuxième légère augmentation de l'écart est due à la relaxation du matériau formant la zone déformable 14a et au relâchement du pot à lait 20a par l'utilisateur.

De même, on remarque que lors du retrait du pot à lait 20a, l'écart entre la plaque métallique 17 et le capteur capacitif 13 diminue légèrement puis augmente fortement avant de diminuer fortement.

La première légère diminution de l'écart est due à l'action de l'utilisateur sur le pot à lait 20a lors de la préhension du pot à lait 20a, l'augmentation de l'écart est due à la suppression de l'action du poids du pot à lait 20a sur la zone déformable 14a combinée à l'attraction de l'aimant 16 sur l'insert 22 qui déforme la zone déformable 14a en direction du pot à lait 20a, et la deuxième diminution de l'écart est due à la relaxation du matériau formant la zone déformable 14a.

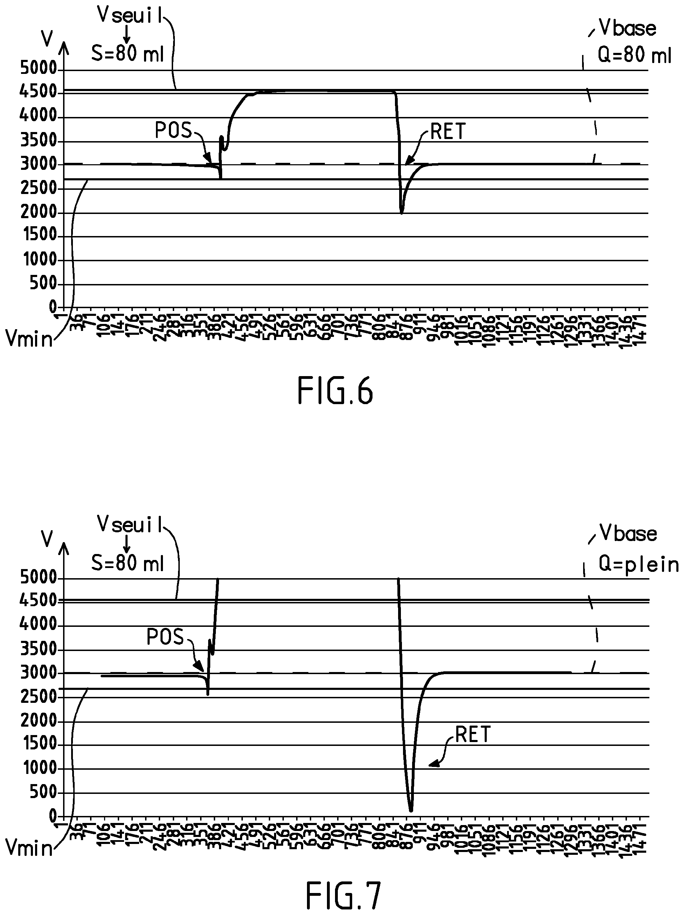

Les graphes des figures 6 et 7 ont été acquis pour des pots à lait 20a comprenant respectivement 80 ml de lait et plein de lait.

Sur ces graphes, on remarque l'apparition d'un pic supplémentaire lors de la pose du pot à lait 20a.

Ce pic tend à s'accentuer avec le poids du pot à lait 20a. La présence de ce pic est simplement due à l'action de l'utilisateur sur le pot à lait 20a lors de la pose du pot à lait 20a dans son emplacement 14.

On remarque surtout sur ces graphes que la valeur V relative au positionnement de la plaque métallique 17 par rapport au capteur capacitif 13 lorsque le pot à lait 20a est absent est relativement stable.

Cette position est utilisée pour déterminer une valeur de base V_{base} du positionnement de la plaque métallique 17 relativement au capteur capacitif 13.

Dans l'exemple présenté, cette valeur de base V_{base} est d'environ 3000 unités.

Dès lors, il apparait possible de définir une valeur seuil Vₛₑᵤᵢₗ du positionnement de la plaque métallique 17 relativement au capteur capacitif 13 correspondant à un seuil S de quantité Q de lait dans le pot à lait 20a.

Dans l'exemple présenté, cette valeur seuil Vₛₑᵤᵢₗ est égale à +1600 unités au-dessus de la valeur de base V_{base}, soit une lecture au-dessus de 4600 unités sur les graphes correspondant à un seuil S de 80ml de lait dans le pot à lait 20a.

Ainsi, si la valeur V relative au positionnement de la plaque métallique 17 par rapport au capteur capacitif 13 est supérieure à la valeur seuil Vₛₑᵤᵢₗ alors les moyens de traitement comprendront que le pot à lait a suffisamment de lait pour réaliser l'ensemble des recettes proposées par la machine à café Espresso.

Dans le cas contraire, les moyens de traitement peuvent générer un signal d'alerte à destination de l'utilisateur.

La valeur de base V_{base} est recalibrée sur une valeur stable suite à la détection du retrait du pot à lait 20a.

Cependant, il n'est pas aisé de faire la différence entre une déformation plastique en présence ou en l'absence de l'aimant 16 dans le signal renvoyé par le capteur capacitif 13.

En effet, il est parfaitement envisageable que l'utilisateur appuie sur la zone déformable 14a avec son doigt puis retire son doigt, ce qui ne correspond pas à un retrait du pot à lait 20a.

Néanmoins, il a été constaté en comparant ces graphes à celui de la figure 4, qu'un retrait du pot à lait 20a provoquait une valeur V relative au positionnement de la plaque métallique 17 par rapport au capteur capacitif 13 qui était toujours beaucoup plus négative en amplitude que la même valeur d'un signal provoqué par le retrait d'un doigt de la zone déformable 14a.

Cette différence s'explique de par la présence de l'aimant 16 sur la zone déformable qui est attiré par l'insert 22 lors du retrait du pot à lait 20a.

Sur la figure 4, on constate qu'un retrait du doigt ne provoque pas une amplitude de plus de 300 unités.

Ainsi, le retrait du pot à lait 20a de son emplacement 14 sur le support 11 est détecté lorsque la valeur V relative au positionnement de la plaque métallique 17 par rapport à la valeur de base V_{base} déterminée est inférieure à une valeur minimale Vₘᵢₙ prédéterminée relative à la force d'attraction de l'aimant 16 sur l'insert 22 lors du retrait du pot à lait 20a de son emplacement sur le support 11.

Dans l'exemple présenté cette valeur minimale Vₘᵢₙ est égale à - 300 unités en dessous de la valeur de base V_{base}, soit une lecture de 2700 unités sur les graphes 5à 7.

## Revendications

1. Système (1) de détection du dépassement d'un seuil (S) déterminé de quantité (Q) de contenu dans un contenant (20) comprenant :
- un dispositif (10) de détection du dépassement d'un seuil (S) déterminé de quantité (Q) de contenu dans un contenant (20), ledit dispositif (10) comprenant :
- un support (11) comprenant :
- un capteur capacitif (13),
- un emplacement (14) apte à accueillir un contenant (20), ledit emplacement (14) comprenant une zone déformable (14a) sous l'action du poids du contenant (20), ladite zone déformable (14a) comprenant une paroi (15) présentant une première face (15a) orientée en direction du contenant (20), et une deuxième face (15b) opposée à la première face (15a), le capteur capacitif (13) étant disposé du côté de la deuxième face (15b) et orienté en direction de la première face (15a),
- un aimant (16) disposé dans la zone déformable (14a) de l'emplacement (14) du support (11) apte à accueillir le contenant (20),
- une plaque métallique (17) disposée entre d'une part l'aimant (16) et d'autre part le capteur capacitif (13), ladite plaque métallique (17) comprenant une partie déformable (17a) maintenue à une distance sensiblement constante de l'aimant (16), et
- une entretoise (18) disposée entre le capteur capacitif (13) et la plaque métallique (17), ladite entretoise (18) comprenant un orifice (18a) agencé d'une part pour placer la partie déformable (17a) de la plaque métallique (17) en regard du capteur capacitif (13) de manière à maintenir la plaque métallique (17) dans un mode fonctionnel du capteur capacitif (13) dans lequel le capteur capacitif (13) émet des signaux relatifs à la distance séparant la plaque métallique (17) et le capteur capacitif (13), et d'autre part pour permettre à la partie déformable (17a) de la plaque métallique (17) de se déformer,
- des moyens de traitements agencés pour :
- traiter les signaux émis par le capteur capacitif (13),
- déterminer une valeur relative au positionnement de la plaque métallique (17) par rapport à une valeur de base (Vbase) déterminée, et
- déterminer si cette valeur (V) relative au positionnement est supérieure à une valeur seuil (Vseuil) déterminée relative à un seuil (S) déterminé de quantité (Q) de contenu dans le contenant (20)
le système de détection du dépassement d'un seuil (S) déterminé de quantité (Q) de contenu dans un contenant (20) comprend en outre le contenant (20) pour le dispositif (10) de détection, ledit contenant (20) comprenant un fond (21) apte à venir en appui de la zone déformable (14a) lorsque le contenant (20) est disposé dans son emplacement (14) sur le support (11), ledit fond (21) comprenant un insert (22) ferromagnétique agencé pour interagir avec l'aimant (16) lorsque le contenant (20) est disposé dans son emplacement (14) sur le support (11).

2. Système (1) selon la revendication 1, dans lequel la valeur de base (V_{base}) est déterminée suite à la détection du retrait du contenant (20) de son emplacement (14) sur le support (11).

3. Système (1) selon l'une des revendications 1 ou 2, dans lequel l'aimant (16) traverse la paroi (15) de la zone déformable (14a) de l'emplacement (14) agencé pour accueillir le contenant (20).

4. Système (1) selon l'une des revendications 1 à 3, dans lequel l'aimant (16) fait saillie de la première face (15a) de la paroi (15) de la zone déformable (14a) de l'emplacement (14) du support (11) et l'insert (22) fait saillie de la surface extérieure (21a) du fond (21) du contenant (20) de manière à ce que l'aimant (16) et l'insert (22) soient au contact l'un de l'autre lorsque le fond (21) du contenant (20) est disposé dans son emplacement (14) sur le support (11).

5. Système (1) selon la revendication 4, dans lequel l'aimant (16) et l'insert (22) font saillie de 0,1 à 0,3 millimètre.

6. Système (1) selon l'une des revendications 1 à 5, dans lequel l'emplacement (14) comprend une portion (19) en saillie sur laquelle est disposée la zone déformable (14a).

7. Système (1) selon la revendication 6, dans lequel le fond (21) du contenant (20) comprend une collerette (23) transverse d'une hauteur inférieure à la hauteur de la portion (19) en saillie de l'emplacement (14) sur laquelle est disposée la zone déformable (14a).

8. Procédé de fonctionnement d'un système (1) de détection selon l'une des revendications 1 à 7 comprenant les étapes suivantes :
- déterminer une valeur de base (V_{base}) relative au positionnement de la plaque métallique (17) lorsque le contenant (20) est détecté comme étant retiré de son emplacement (14) sur le support (11),
- positionner le contenant (20) sur son emplacement (14) sur le support (11),
- déterminer une valeur relative (V) au positionnement de la plaque métallique (17) par rapport à la valeur de base (V_{base}) déterminée,
- déterminer si cette valeur relative (V) est supérieure à une valeur seuil (Vₛₑᵤᵢₗ) déterminée corrélée à un seuil (S) déterminé de quantité (Q) de contenu dans le contenant (20).

9. Procédé de fonctionnement selon la revendication 8, comprenant en outre une étape consistant à générer un signal d'alerte à destination de l'utilisateur lorsque cette valeur relative (V) au positionnement est inférieure à la valeur seuil (Vₛₑᵤᵢₗ) déterminée.

10. Procédé de fonctionnement selon l'une des revendications 8 ou 9, dans lequel la valeur de base (V_{base}) est déterminée suite à la détection d'un retrait du contenant (20) de son emplacement (14) sur le support (11).

11. Procédé de fonctionnement selon la revendication 10, dans lequel le retrait du contenant (20) de son emplacement (14) sur le support (11) est détecté lorsque la valeur relative (V) au positionnement de la plaque métallique (17) par rapport à la valeur de base (V_{base}) déterminée est inférieure à une valeur minimale (Vₘᵢₙ) prédéterminée relative à la force d'attraction de l'aimant (16) sur l'insert (22) lors du retrait du contenant (20) de son emplacement (14) sur le support (11).

12. Appareil électroménager (100) comprenant un système (1) de détection du dépassement d'un seuil (S) déterminé de quantité (Q) de contenu dans un contenant (20) selon l'une des revendications 1 à 7.

13. Appareil électroménager (100) selon la revendication 12, dans lequel le contenant (20) est un pot à lait (20a), un bac à cake (20b), ou un réservoir d'eau (20c) d'une machine à café Espresso.

## Patentansprüche

1. System (1) zur Erfassung der Überschreitung einer bestimmten Schwelle (S) der Menge (Q) eines Inhalts in einem Behälter (20), umfassend:
- eine Vorrichtung (10) zur Erfassung der Überschreitung einer bestimmten Schwelle (S) der Menge (Q) eines Inhalts in einem Behälter (20), wobei die Vorrichtung (10) umfasst:
- einen Träger (11), umfassend:
- einen kapazitiven Sensor (13),
- eine Stelle (14), die geeignet ist, einen Behälter (20) aufzunehmen, wobei die Stelle (14) einen unter der Einwirkung des Gewichts des Behälters (20) verformbaren Bereich (14a) umfasst, wobei der verformbare Bereich (14a) eine Wand (15) umfasst, die eine erste Seite (15a), in Richtung auf den Behälter (20) ausgerichtet, und eine zweite Seite (15b) gegenüber der ersten Seite (15a) aufweist, wobei der kapazitive Sensor (13) seitens der zweiten Seite (15b) angeordnet ist und in Richtung auf die erste Seite (15a) ausgerichtet ist,
- einen Magneten (16), im verformbaren Bereich (14a) der Stelle (14) des Trägers (11) angeordnet, die geeignet ist, den Behälter (20) aufzunehmen,
- eine Metallplatte (17), die zwischen einerseits dem Magneten (16) und andererseits dem kapazitiven Sensor (13) angeordnet ist, wobei die Metallplatte (17) einen verformbaren Teil (17a) umfasst, der in einem im Wesentlichen konstanten Abstand zum Magneten (16) gehalten wird, und
- einen Abstandhalter (18), der zwischen dem kapazitiven Sensor (13) und der Metallplatte angeordnet ist, wobei der Abstandhalter (18) eine Öffnung (18a) umfasst, die einerseits eingerichtet ist, um den verformbaren Teil (17a) der Metallplatte (17) dem kapazitiven Sensor (13) zugewandt zu platzieren, sodass die Metallplatte (17) in einem funktionellen Modus des kapazitiven Sensors (13) gehalten wird, bei dem der kapazitive Sensor (13) Signale bezüglich des Abstands ausgibt, der die Metallplatte (17) und den kapazitiven Sensor (13) trennt, und andererseits, um dem verformbaren Teil (17a) der Metallplatte (17) zu ermöglichen, sich zu verformen,
- Verarbeitungsmittel, die einrichtet sind zum:
- Verarbeiten der Signale, die von dem kapazitiven Sensor (13) ausgegeben werden,
- Bestimmen eines Werts bezüglich der Positionierung der Metallplatte (17) in Bezug auf einen bestimmten Basiswert (Vbase), und
- Bestimmen, ob dieser Wert (V) bezüglich der Positionierung größer als ein bestimmter Schwellenwert (Vseuil) bezüglich einer bestimmten Schwelle (S) der Menge (Q) eines Inhalts in dem Behälter (20) ist,
wobei das System zur Erfassung der Überschreitung einer bestimmten Schwelle (S) der Menge (Q) eines Inhalts in einem Behälter (20) weiter einen Behälter (20) für die Vorrichtung (10) zur Erfassung umfasst, wobei der Behälter (20) einen Boden (21) umfasst, der geeignet ist, den verformbaren Bereich (14a) zu unterstützen, wenn der Behälter (20) in seiner Stelle (14) auf dem Träger (11) angeordnet wird, wobei der Boden (21) eine ferromagnetische Einlage (22) umfasst, die eingerichtet ist, um mit dem Magneten (16) zu interagieren, wenn der Behälter (20) in seiner Stelle (14) auf dem Träger (11) angeordnet wird.

2. System (1) nach Anspruch 1, wobei der Basiswert (V_{base}) im Anschluss an die Erfassung der Entnahme des Behälters (20) aus seiner Stelle (14) auf dem Träger (11) bestimmt wird.

3. System (1) nach einem der Ansprüche 1 oder 2, wobei der Magnet (16) die Wand (15) des verformbaren Bereichs (14a) der Stelle (14) durchquert, die eingerichtet ist, um den Behälter (20) aufzunehmen.

4. System (1) nach einem der Ansprüche 1 bis 3, wobei der Magnet (16) aus der ersten Seite (15a) der Wand (15) des verformbaren Bereichs (14a) der Stelle (14) des Trägers (11) hervorsteht und die Einlage (22) aus der Außenfläche (21a) des Bodens (21) des Behälters (20) hervorsteht, sodass der Magnet (16) und die Einlage (22) sich gegenseitig berühren, wenn der Boden (21) des Behälters (20) in seiner Stelle (14) auf dem Träger (11) angeordnet wird.

5. System (1) nach Anspruch 4, wobei der Magnet (16) und die Einlage (22) von 0,1 bis 0,3 Millimeter hervorstehen.

6. System (1) nach einem der Ansprüche 1 bis 5, wobei die Stelle (14) einen hervorstehenden Abschnitt (19) umfasst, auf dem der verformbare Bereich (14a) angeordnet ist.

7. System (1) nach Anspruch 6, wobei der Boden (21) des Behälters (20) einen querverlaufenden Kragen (23) mit einer Höhe umfasst, die niedriger ist als die Höhe des hervorstehenden Abschnitts (19) der Stelle (14), auf der der verformbare Bereich (14a) angeordnet ist.

8. Verfahren zum Betrieb eines Systems (1) zur Erfassung nach einem der Ansprüche 1 bis 7, umfassend die folgenden Schritte:
- Bestimmen eines Basiswerts (V_{base}) bezüglich der Positionierung der Metallplatte (17), wenn der Behälter (20) als aus seiner Stelle (14) auf dem Träger (11) entnommen erfasst wird,
- Positionieren des Behälters (20) auf seiner Stelle (14) auf dem Träger (11),
- Bestimmen eines auf die Positionierung der Metallplatte (17) bezogenen Werts (V) in Bezug auf den bestimmten Basiswert (V_{base}),
- Bestimmen, ob dieser bezogene Wert (V) größer als ein bestimmter Schwellenwert (Vₛₑᵤᵢₗ) ist, der mit einer bestimmten Schwelle (S) der Menge (Q) eines Inhalts in dem Behälter (20) korreliert.

9. Betriebsverfahren nach Anspruch 8, weiter einen Schritt umfassend, der darin besteht, ein an den Benutzer gerichtetes Alarmsignal zu erzeugen, wenn dieser auf die Positionierung bezogene Wert (V) kleiner als der bestimmte Schwellenwert (Vₛₑᵤᵢₗ) ist.

10. Betriebsverfahren nach einem der Ansprüche 8 oder 9, wobei der Basiswert (V_{base}) im Anschluss an die Erfassung einer Entnahme des Behälters (20) aus seiner Stelle (14) auf dem Träger (11) bestimmt wird.

11. Betriebsverfahren nach Anspruch 10, wobei die Entnahme des Behälters (20) aus seiner Stelle (14) auf dem Träger (11) erfasst wird, wenn der auf die Positionierung der Metallplatte (17) bezogene Wert (V) in Bezug auf den bestimmten Basiswert (V_{base}) kleiner als ein vorbestimmter Mindestwert (Vₘᵢₙ) bezüglich der Anziehungskraft des Magneten (16) auf die Einlage (22) bei der Entnahme des Behälters (20) aus seiner Stelle (14) auf dem Träger (11) ist.

12. Elektrohaushaltseinrichtung (100), umfassend ein System (1) zur Erfassung der Überschreitung einer bestimmten Schwelle (S) der Menge (Q) eines Inhalts in einem Behälter (20) nach einem der Ansprüche 1 bis 7.

13. Elektrohaushaltseinrichtung (100) nach Anspruch 12, wobei der Behälter (20) eine Milchkanne (20a), eine Gebäckschale (20b) oder ein Wasserbehältnis (20c) einer Espresso-Kaffeemaschine ist.

## Claims

1. System (1) for detecting the exceeding of a determined threshold (S) for quantity (Q) of contents in a container (20) comprising:
- a device (10) for detecting the exceeding of a determined threshold (S) for quantity (Q) of contents in a container (20), said device (10) comprising:
- a holder (11) comprising :
- a capacitive sensor (13),
- a location (14) suitable for receiving a container (20), said location (14) comprising a zone (14a) that is deformable under the action of the weight of the container (20), said deformable zone (14a) comprising a wall (15) having a first face (15a) oriented towards the container (20), and a second face (15b) opposite the first face (15a), the capacitive sensor (13) being arranged on the side of the second face (15b) and oriented towards the first face (15a),
- a magnet (16) which is arranged in the deformable zone (14a) of the location (14) of the holder (11) and suitable for receiving the container (20),
- a metal plate (17) arranged between the magnet (16) on the one hand and the capacitive sensor (13) on the other hand, said metal plate (17) comprising a deformable part (17a) kept at a substantially constant distance from the magnet (16), and
- a spacer (18) arranged between the capacitive sensor (13) and the metal plate, said spacer (18) comprising an opening (18a) designed on the one hand to place the deformable part (17a) of the metal plate (17) facing the capacitive sensor (13) so as to keep the metal plate (17) in a functional mode of the capacitive sensor (13) in which the capacitive sensor (13) emits signals relating to the distance separating the metal plate (17) and the capacitive sensor (13), and on the other hand to allow the deformable part (17a) of the metal plate (17) to deform,
- processing means designed to:
- process the signals emitted by the capacitive sensor (13),
- determine a relative value for the position of the metal plate (17) with respect to a determined base value (V_{base}), and
- determine whether this relative value (V) for the position is higher than a determined threshold value (V_{threshold}) relating to a determined threshold (S) for quantity (Q) of contents in the container (20),
the system for detecting the exceeding of a determined threshold (S) for quantity (Q) of contents in a container (20) further comprises the container (20) for the detection device (10), said container (20) comprising a bottom (21) capable of bearing against the deformable zone (14a) when the container (20) is arranged in its location (14) on the holder (11), said bottom (21) comprising a ferromagnetic insert (22) designed to interact with the magnet (16) when the container (20) is arranged in its location (14) on the holder (11).

2. System (1) according to claim 1, wherein the base value (V_{base}) is determined following detection of the removal of the container (20) from its location (14) on the holder (11).

3. System (1) according to any of claims 1 or 2, wherein the magnet (16) passes through the wall (15) of the deformable zone (14a) of the location (14) designed to receive the container (20).

4. System (1) according to any of claims 1 to 3, wherein the magnet (16) protrudes from the first face (15a) of the wall (15) of the deformable zone (14a) of the location (14) of the holder (11) and the insert (22) protrudes from the outer surface (21a) of the bottom (21) of the container (20) so that the magnet (16) and the insert (22) are in contact with each other when the bottom (21) of the container (20) is arranged in its location (14) on the holder (11).

5. System (1) according to claim 4, wherein the magnet (16) and the insert (22) protrude by 0.1 to 0.3 millimetres.

6. System (1) according to any of claims 1 to 5, wherein the location (14) comprises a protruding portion (19) on which the deformable zone (14a) is arranged.

7. System (1) according to claim 6, wherein the bottom (21) of the container (20) comprises a transverse flange (23) with a height lower than the height of the protruding portion (19) of the location (14) on which the deformable zone (14a) is arranged.

8. Method for operating a detection system (1) according to any of claims 1 to 7, comprising the following steps :
- determining a relative base value (V_{base}) for the position of the metal plate (17) when the container (20) is detected as having been removed from its location (14) on the holder (11),
- positioning the container (20) on its location (14) on the holder (11),
- determining a relative value (V) for the position of the metal plate (17) with respect to the determined base value (V_{base}),
- determining whether this relative value (V) is higher than a determined threshold value (V_{threshold}) correlated to a determined threshold (S) for quantity (Q) of contents in the container (20).

9. Operating method according to claim 8, further comprising a step consisting of generating an alert signal to the user when this relative value (V) for the position is lower than the determined threshold value (V_{threshold}).

10. Operating method according to any of claims 8 or 9, wherein the base value (V_{base}) is determined following the detection of a removal of the container (20) from its location (14) on the holder (11).

11. Operating method according to claim 10, wherein the removal of the container (20) from its location (14) on the holder (11) is detected when the relative value (V) for the position of the metal plate (17) with respect to the determined base value (V_{base}) is lower than a predetermined minimum value (Vₘᵢₙ) relating to the attractive force of the magnet (16) on the insert (22) when the container (20) is removed from its location (14) on the holder (11).

12. Household electrical appliance (100) comprising a system (1) for detecting the exceeding of a determined threshold (S) for quantity (Q) of contents in a container (20) according to any of claims 1 to 7.

13. Household electrical appliance (100) according to claim 12, wherein the container (20) is a milk jug (20a), a cake tray (20b), or a water tank (20c) of an espresso coffee machine.
